# EUROPEAN PATENT SPECIFICATION

(11) **EP 4 668 140 B1**
(45) Date of publication and mention of the grant of the patent: **05.08.2026**
(21) Application number: 25180789.7
(22) Date of filing: 04.06.2025
(51) Int. Cl.: G06F 21/31, G06F 21/44, G06F 21/32, G06F 21/33

(54) **SECURE IDENTIFICATION SYSTEM**
SICHERES IDENTIFIKATIONSSYSTEM
SYSTÈME D'IDENTIFICATION SÉCURISÉ

(30) Priority: 20.06.2024 SE 2450684
(43) Date of publication of application: 24.12.2025
(73) Proprietor: Fingerprint Cards Anacatum IP AB, 411 19 Göteborg (SE)
(72) Inventor: TUNELD, Mats, 226 57 LUND (SE); HAMMERSBERG, Johan, 448 36 FLODA (SE); THÖRNBLAD, Jonas, 413 14 GÖTEBORG (SE)
(74) Representative: Kransell & Wennborg KB

(56) References cited:
- KR-A- 20200 143 772
- US-A1- 2021 336 792
- REPORT OF SECURITY WORKSTREAM: "Implementation of secure authentication technologies for digital financial services", vol. ties/17, 28 February 2023 (2023-02-28), pages 1 - 66, XP044355675, Retrieved from the Internet <URL:https://www-api.itu.int/ifa/t/2022/sg17/docs/230221/td/ties/plen/T22-SG17-230221-TD-PLEN-1039!!ZIP-E.zip Implementation-of-Secure-Authentication-Technologies-for-DFS-1-1.pdf> [retrieved on 20230228]

## Description

### TECHNICAL FIELD

The present disclosure relates to a method of enrolling an individual at a secure server and subsequently authenticating and identifying the individual at an authenticating party using an authentication token created during the enrolment and a secure server performing the method.

### BACKGROUND

There is a need for better on-line identification systems then those that are currently in use. Systems on the market typically depend on less secure methods such as proprietary camera-based systems.

### SUMMARY

One objective is to solve, or at least mitigate, the problems in the art and thus to provide an improved approach of enrolling an individual at a secure server for secure identification.

This objective is attained in a first aspect by a method of enrolling an individual at a secure server. The method comprises engaging, via a user device, in an enrolment process with the individual, registering the user device by receiving a public key, the public key being created by the user device along with a private key corresponding to the public key, acquiring a trusted identifier of the individual, associating the acquired trusted identifier of the individual with at least one database index to create an authentication token, the database index being utilized for look-up at the secure server, signing the authentication token, and sending the signed authentication token to the user device, while deleting the acquired trusted identifier at the secure server.

This objective is attained in a second aspect by a secure server configured to enrol an individual, the secure server comprising a processing unit and a memory, said memory containing instructions executable by said processing unit, whereby the secure server is operative to engaging, via a user device, in an enrolment process with the individual, registering the user device by receiving a public key, the public key being created by the user device along with a private key corresponding to the public key, acquiring a trusted identifier of the individual, associating the acquired trusted identifier of the individual with at least one database index to create an authentication token, the database index being utilized for look-up at the secure server, signing the authentication token, and sending the signed authentication token to the user device, while deleting the acquired trusted identifier at the secure server.

Advantageously, the trusted identifier is not stored on the secure server but at the user device of the individual for later use. The registering of the public key using e.g. Fast IDentity Online (FIDO) and the feature that no personal data is stored in the secure server advantageously provide a high security and resistance against scalable attacks.

In an embodiment, the engaging in the enrolment process comprises receiving, from the user device, an enrolment request.

In an embodiment, the trusted identifier comprises signed personal data of the individual including at least one or more of name, address, personal identity number and social security number of the individual.

In an embodiment, the trusted identifier of the individual is received from the user device or from a trusted third party identity provider.

In an embodiment, said at least one database index includes one or more of the public key of the user device, contact information of the individual including at least one or more of a telephone number, IP address, e-mail address, International Mobile Subscriber Identity (IMSI) of the user device, and a created user identifier.

In an embodiment, a group enrolment is performed where a plurality of public keys are received that are created by the user device along with private keys corresponding to the public keys.

In an embodiment, each public key being received is associated with at least one database index.

In an embodiment, the public key of the user device has been signed with an attestation key of a trusted provider.

In an embodiment, the further comprises authenticating the user device by sending a nonce to the user device, receiving the nonce signed by the user device, and verifying the signed nonce using the public key of the user device.

In an embodiment, the method comprises requesting authentication of the individual at the user device upon sending the nonce, wherein the nonce is signed at the user device if there is a match when comparing biometric data of the individual extracted locally at the user device to a biometric template stored at the user device.

In an embodiment, the method further comprises receiving, from a party to which the individual sends an authentication request, via the user device, a database index included in the signed authentication token sent with the authentication request, which signed authentication token is verified at said party, verifying that the database index has been previously enrolled, authenticating the user device by providing the user device with a challenge and having the user device prove knowledge of the challenge, and sending a confirmation to said party that the authentication of the user device is successful.

In an embodiment, the verification performed at said party further comprises verifying that personal data included in the trusted identifier matches personal data provided by the individual with the authentication request.

In an embodiment, the authenticating of the user device comprises sending a nonce to the user device, receiving the nonce signed by the user device, and verifying the signed nonce using the public key of the user device.

In an embodiment, the method further comprises requesting authentication of the individual at the user device upon sending the nonce, wherein the nonce is signed at the user device if there is a match when comparing biometric data of the individual extracted locally at the user device to a biometric template stored at the user device.

In an embodiment, the method further comprises receiving, from a party with which the individual communicates via the user device, contact information of the individual along with a public key of said party, verifying that a public key of the user device has been previously enrolled for the received contact information of the individual, authenticating the user device by providing the user device with a challenge and having the user device prove knowledge of the challenge, while providing the user device with the public key of said party and in response receiving the signed authentication token from the user device encrypted with the public key of said party, and sending the encrypted signed authentication token to said party, wherein said party decrypts the encrypted signed authentication token using the corresponding private key and verifies the signed authentication token.

In an embodiment, the verification performed at said party further comprises verifying that personal data included in the trusted identifier matches personal data provided by the individual when communicating with said party.

In an embodiment, the authenticating of the user device comprises sending a nonce to the user device along with the public key of said party, receiving the nonce signed by the user device along with the encrypted signed authentication token, and verifying the signed nonce using the public key of the user device.

In an embodiment, the method further comprises requesting authentication of the individual at the user device upon sending the nonce and the public key of said party, wherein the nonce is signed at the user device, and the signed authentication token is encrypted, if there is a match when comparing biometric data of the individual extracted locally at the user device to a biometric template stored at the user device.

In an embodiment,, the secure server is configured to register all enrolments, authentications and identifications being undertaken with associated timestamps to facilitate traceability.

In a third aspect, a computer program is provided comprising computer-executable instructions for causing a secure server to perform steps recited in the method of the first aspect when the computer-executable instructions are executed on a processing unit included in the secure server.

In a fourth aspect, a computer program product is provided comprising a computer readable medium, the computer readable medium having the computer program according to the third aspect embodied thereon.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 illustrates a communication network in which embodiments may be implemented;
Figure 2a shows a signalling diagram illustrating a method of enrolling an individual according to an embodiment;
Figure 2b shows a signalling diagram illustrating a method of enrolling an individual according to a further embodiment;
Figure 3 shows a signalling diagram illustrating a method of identifying an individual according to an embodiment;
Figure 4 shows a signalling diagram illustrating a method of identifying an individual according to another embodiment; and
Figure 5 illustrates a secure server according to an embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

A common authentication protocol on which embodiments may be based is that proposed by the so-called Fast IDentity Online (FIDO) alliance. The FIDO protocol applies public key/private key method for authentication . commonly referred to as a public key infrastructure (PKI) - where the purpose is to avoid the use of passwords. As is understood, many other authentication protocols may be envisaged.

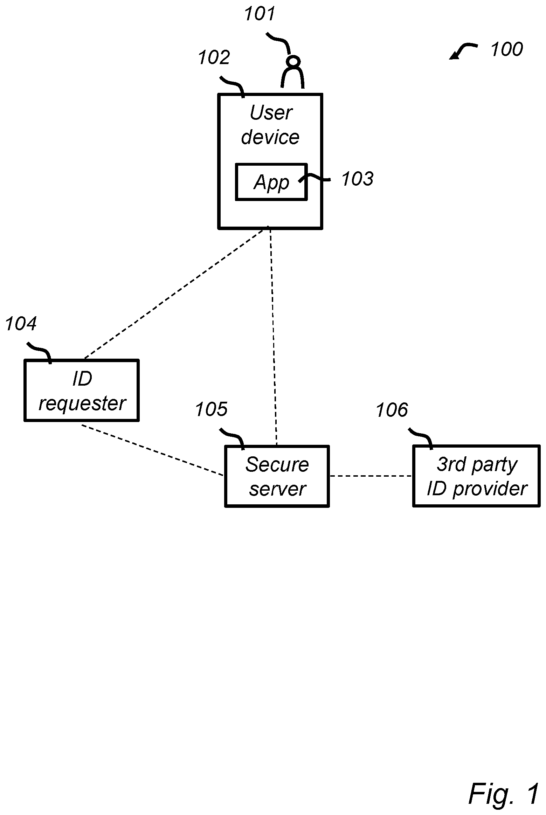

Figure 1 illustrates an authentication system 100 according to an embodiment, where an individual 101 has access to a user device 102, such as e.g. a smart phone, tablet, laptop, desktop, etc., executing an app 103 being equipped with public and private key(s) in order to be capable of being incorporated in an appropriate PKI implemented in the system 100. As mentioned, the app 103 may for example be configured to run a FIDO authentication protocol.

Further shown in the system 100 of Figure 1 is an identity (ID) requester 104 with which the individual is to be identified, and a secure server 105 at which the individual is enrolled prior to the identification with the ID requester 104. Also shown is an optional ID provider 106 for providing a trusted ID on behalf of the individual 101, e.g. a trusted 3^{rd} party ID provider. As an example, the ID requester 104 may also be embodied in the form of a user device. For instance, upon the individual 101 using her user device 102 to call the ID requester 104 (also being a user device), the ID requester may require the individual to identify herself.

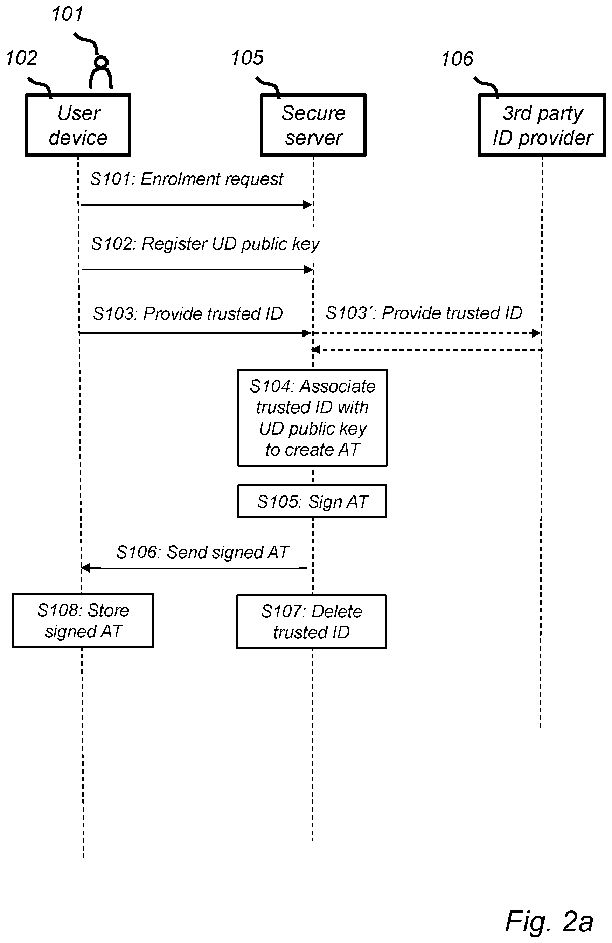

Figure 2a shows a signalling diagram illustrating enrolment of the individual 101 in an embodiment via the user device (UD) 102 and the app 103.

Thus, the secure server 105 and the individual 101 will engage, via the user device 102, in an enrolment process in S101. In an example, the individual 101 sends a request in S101 for enrolment with the secure server 105 via the user device 102. Alternatively, the secure server 105 sends a request to the user device 102 for initiating the enrolment process. As previously discussed, this may be performed while complying with the FIDO authentication protocol or any other appropriate authentication protocol. In other words, as a part of a FIDO registration process it is assumed that the individual/user device requesting the enrolment will create at least one public/private key pair. With the FIDO registration in S102, a public key of the user device 102 is hence sent to the secure server 105.

It should be noted that the FIDO registration in S102 may be preceded by an attestation of the public key at the user device 102. For instance, the user device 102 may receive an attestation key from a trusted FIDO service provider, which attestation key is used to sign the created public key such that it can be entrusted by the secure server 105.

In S103, the individual 101 provides the secure server 105 with a trusted ID, which trusted ID comprises personal data associated with the individual 101 such as e.g. name, address, personal identity number, social security number, or contact information such as e.g. phone number, e-mail address, IP address, etc. The ID comprising the personal data is provided with trust for instance by having been signed by a certificate issuer with a trusted certificate (applying e.g. the X.509 standard discussed in more detail below). Alternatively, the trusted ID may, as shown in S103', be provided to the secure server 105 via a trusted 3^{rd} party ID provider 106, such as e.g. the commonly used ID provision system known as "BankID" in Sweden, by transmitting the personal data to the 3^{rd} party ID in S103' and then receiving a confirmation that the personal data can be trusted, thus providing the secure server 105 with the trusted ID.

It should be noted that a communication channel established between the user device 102 and the secure server 105 (and/or the 3^{rd} party ID provider 106) typically comprises sensitive information, such as the trusted ID, and may thus either be protected utilizing for instance a transport layer security (TLS) protocol or end-to-end public key encryption. The providing of the signature by the secure server 105 is typically based on standard PKI procedures. The associated certificate utilized to prove validity of a public key shall preferably be revokable and can be verified with the secure server 105 itself (or other trusted sources on the internet using X.509 or similar, X.509 being a well-established International Telecommunication Union (ITU) standard.

Upon acquiring the trusted ID of the individual 101 (i.e. directly from the user device 102 in S103 or via the 3^{rd} party provider 106 in S103'), the secure server 105 associates in S103 the trusted ID of the individual 101 with at least one database index, thereby creating an authentication token (AT). The database index is associated with the trusted ID in order to subsequently facilitate look-up at the secure server 105 as will be discussed in more detail hereinbelow. For instance, the authentication token may be formed by concatenating the trusted ID (TID) with the public key of the user device (UD) as a database index, i.e. AT = TID || UD public key.

In S104, while the public key of the user device 102 in an example is used as a database index, other database indices are envisaged, such as a created unique user ID (UUID), IP address or International Mobile Subscriber Identity (IMSI) of the user device 102, e-mail address, etc., other than the public key of the user device 102. Further, it may be envisaged that more than one database index is associated with the trusted ID to form the authentication token, such as both the public key of the user device 102 and the IMSI, resulting in AT = TID || UD public key || IMSI. The secure server 105 may host a database in which the public key of the user device 102 is stored in an entry along with the database index (e.g. the IMSI) with which the key is associated for look-up purposes during subsequent authentication. A flag may further be associated with said entry indicating whether or not the individual 101 has been successfully identified by means of the trusted ID.

It may also be envisaged that a group enrolment is performed. For instance, a representative 101 of a company may enrol a plurality of database indices, such as e,g. IMSIs, IP addresses, e-mail addresses, telephone numbers, etc., i.e. one or more indices for each public key created by the user device 102 and sent to the secure server in S102, i.e. in which case any individual holding e.g. an enrolled IMSI can be authenticated upon utilizing said corresponding public key. Thus, a public key will be enrolled for each database index, and an authentication token may thus comprise numerous public keys - each key having an IMSI assigned with it for database look-up - associated with the trusted ID of the enrolling party 101, in this case the company representative. It may also be envisaged that one authentication token is created for each public key and corresponding IMSI being associated with the trusted ID. Either way, a number of public keys and corresponding IMSIs are registered with the secure server 105 in the group enrolment.

Thereafter, in S105, the secure server 105 signs the authentication token(s) with a private key such that the signature - and thus the authentication token(s) - subsequently can be verified. The signature created by means of utilizing the private key of the secure server 105 advantageously provides non-repudiation in that it does not only ensure that the signed authentication token indeed originated from a known (and trusted) party in possession of the private key used for creating the signature, i.e. the secure server 105, but further prevents the party from claiming that it has not signed the authentication token.

The secure server 105 sends the signed authentication token to the user device 102 in S106 and thereafter actively deletes the authentication token in S107 - and any further data comprising the trusted ID - such that the trusted ID advantageously is not stored on (or in connection to) the secure server 105. The user device 102 on the other hand stores the signed authentication token in S108 in order to subsequently be able to use the token for authentication purposes. The signed authentication token is preferably stored in a secure memory of the user device 102.

The system described is based on chain-of-trust where the ID of the individual 101 will not be stored on the secure server 105 but only on the user device 102 client for later usage. The combination with FIDO authentication, or any other appropriate authentication protocol, and the fact that no personal information is stored on the server 105 provides for high security and resistance against scalable attacks.

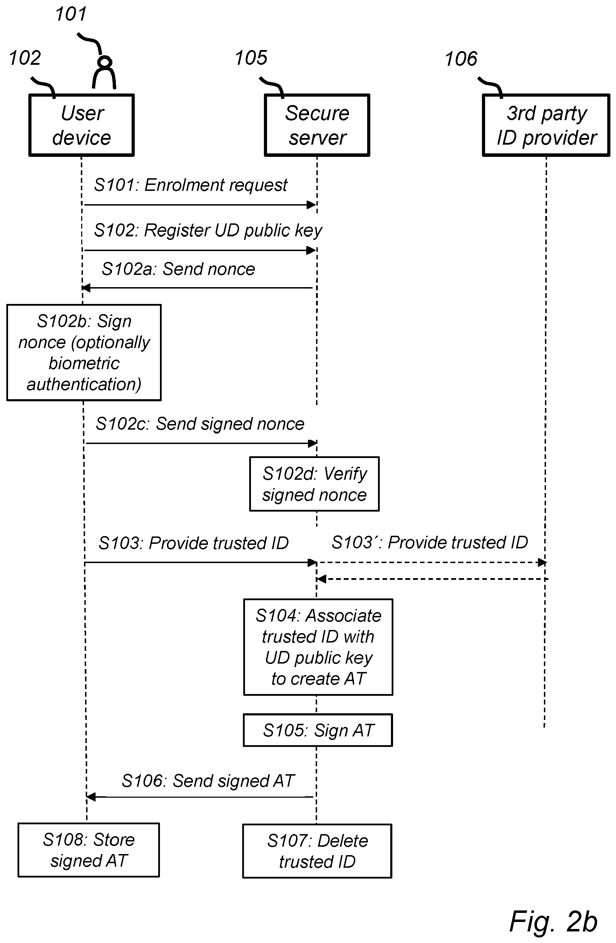

Figure 2b shows a signalling diagram illustrating enrolment of the individual 101 in a further embodiment. In addition to the steps illustrated in Figure 2a, as a part of the registration S102, the secure server 105 authenticates the user device 102 by having the user device 102 prove knowledge of a challenge provided by the secure server 105 before proceeding to step S103. In other words, the secure server 105 will send a challenge, such as e.g. a random number, to the user device 102 which the user device 102 will have to sign and thus verify that it indeed received the challenge.

In more detail, the authentication may in an exemplifying embodiment be performed by the secure server 105 providing a challenge to the user device 102 in step S102a. For instance, the secure server 105 may generate a random number (commonly referred to as a nonce) and send the nonce to the user device 102 in S102a. In order for the secure server 105 to authenticate the user device 102, the user device 102 signs the nonce in S102b with a user device private key and sends the signed nonce to the secure server 105 in S102c.

The secure server 105 verifies in S102d the signature having been provided to the nonce by utilizing the public key of the user device 102 received in S101 and ensures that the nonce received in S102c is the same as the nonce that was sent in S102a, wherein the user device 102 is successfully authenticated at the secure server 105.

Optionally in S102b, before the user device 102 signing the nonce, the individual 101 may be requested to authenticate herself locally at the user device 102 by the secure server 105 upon sending the nonce in S102a. For instance, the user device 102 may be provided with a fingerprint sensor, iris sensor, face sensor, etc., configured to extract biometric data of the individual 101, which extracted biometric data is compared to a biometric template securely stored at the user device 102, and if there is a match, the individual is authenticated at the user device 102, which proceeds with signing the nonce and sending the signed nonce to the secure server 105 in S102c.

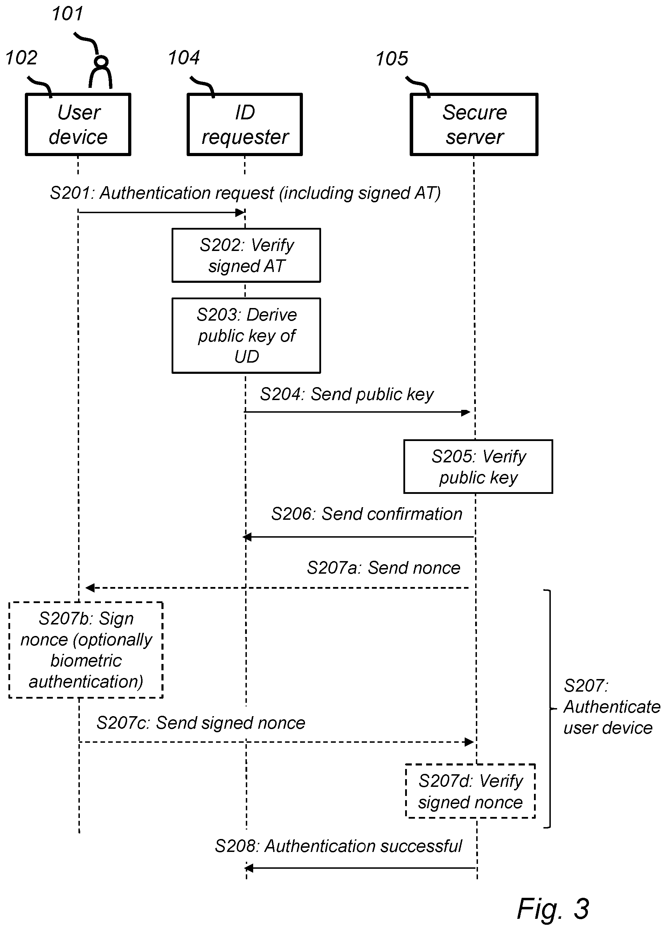

Figure 3 shows a signalling diagram illustrating identification of the individual 101 via the user device 102 according to an embodiment.

In a first step S201, the individual 101 sends, via the user device 102 to the ID requester 104, an authentication request comprising the signed authentication token that previously was received from the secure server 105 with which the individual initially was enrolled.

In S202, the ID requester 104 uses the public key of the secure server 105 to verify the signed authentication token received in S201. As is understood, the public key of the secure server 105 may be included by the user device 102 in the request sent in S201 or alternatively the ID requester 104 has already been provided with the public key as a result of forming part of a PKI including the secure server 105. Thus, this verification is successful if the public key utilized for the verification corresponds to the private key that was used by the secure server 105 upon initially signing the authentication token in S104 of Figure 2a. In other words, the verification of the signed authentication token in S202 is successful if indeed the private key that was used for the signing (in S105 of Figure 2a) and the public key used for the verification in S202 belongs to the same private/public key pair of the secure server 105. Alternatively, a certificate utilized by the secured server 105 in S105 is verified in S202.

In an embodiment, the personal data included in the trusted ID, e.g. the name of the individual 101, is included with the request sent in S201. Advantageously, this strengthens the verification step of S202 in that the ID requester 104 thus can ensure that the personal data sent with the request corresponds to the personal data included in the trusted ID of the signed authentication token.

In case the verification is successful in S202, the ID requester 104 derives the public key of the user device 102 from the authentication token in S203, i.e. by verifying sign(TID || UD public key) and then deriving the public key from the concatenation, and sends the public key of the user device 102 in S204 to the secure server 105. Should the verification be unsuccessful in S202, the authentication process is terminated (and the individual may optionally be informed accordingly). As is understood, this may include sending contact information such that the secure server 105 may contact the individual 101 via the user device 102 unless such contact information has not already been associated with the public key of the user device 102 stored at the secure server 105.

The secure server 105 will upon receiving the public key of the user device 102 in S204 turn to the previously discussed database and determine in S205 whether or not an entry comprising this particular public key exists to verify that the individual 101 indeed has been enrolled with the secure server 105 (which enrolment was requested in S101 of Figure 2a) and accordingly send a confirmation of the enrolment to the ID requester 104 in S206.

As previously mentioned, for look-up purposes, data such as UUID, IMSI, IP address, etc., may be associated with an entry as database indices as discussed previously with reference to step S104 of Figure 2a, in which case such information is extracted by the ID requester 104 in S203 from the signed authentication token and sent to the secure server 105 to be used for assisting look-up in the database.

As is understood, should the secure server 105 notify the ID requester 104 in S205 that the particular public key (or any other data used as database index) cannot be found in the database, and thus that the individual 101 has not been enrolled with the secure server 105, the ID requester 104 may send an instruction to the individual 101 via the user device 102 to enrol with the secure server 105, wherein the identification process is terminated and needs to be reiterated once the individual 101 indeed has enrolled with the secure server 105 as previously described in detail with reference to steps S101-S107 of Figure 2a.

As part of a FIDO authentication process, the secure server 105 authenticates the user device 102 in step S207 by having the user device 102 prove knowledge of a challenge provided by the secure server 105 before confirming successful authentication to the ID requester 104 in step S208.

The authentication of S207 is in an exemplifying embodiment performed by the secure server 105 providing a challenge to the user device 102 in step S207a. Thus, the secure server 105 generates a nonce and sends the nonce to the user device 102 in S207a. In order for the secure server 105 to authenticate the user device 102, the user device 102 signs the nonce in S207b with a user device private key and sends the signed nonce to the secure server 105 in S207c.

The secure server 105 verifies in S207d the signature having been provided to the nonce by utilizing the public key of the user device 102 verified in S205 and ensures that the nonce received in S207c is the same as the nonce that was sent in S207a, wherein the user device 102 is successfully authenticated at the secure server 105.

Before the user device 102 signs the nonce, the individual 101 may optionally be requested to authenticate herself locally at the user device 102. The user device 102 may be provided with a fingerprint sensor, iris sensor, face sensor, etc., configured to extract biometric data of the individual 101, which extracted biometric data is compared to a biometric template securely stored at the user device 102, and if there is a match, the individual is authenticated at the user device 102, which proceeds with signing the nonce and sending the signed nonce to the secure server 105 in S207c.

Finally, upon successful authentication in S207d, the secure server 105 sends a conformation thereof to the ID requester 104 in S208, wherein the individual 101 advantageously has been identified at the ID requester 104 by utilizing the signed authentication token received upon successful enrolment of the individual 101.

It should be noted that the above process S207 of having the user device 102 prove knowledge of a challenge provided by the secure server 105, as exemplified throughout steps S207a-S207d, is exemplifying only and that other approaches may be envisaged.

Again, communication between the user device 102, the ID requester 105 and the secure server 105 may be undertaken over secure channels using e.g. TLS or end-to-end encryption.

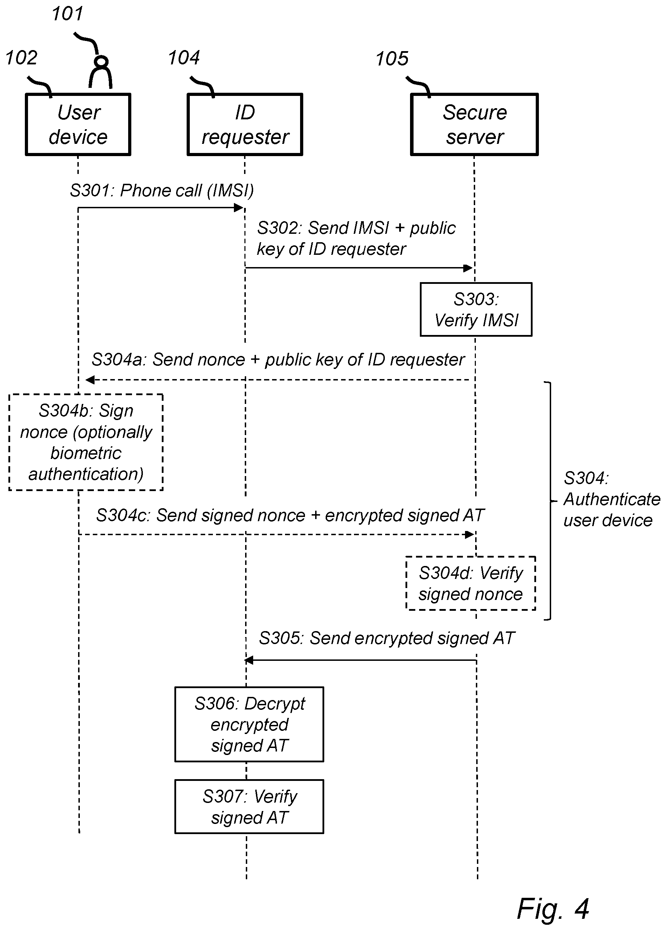

Figure 4 illustrate a further embodiment, where the individual 101 utilizes her user device 102 to contact the ID requester 104. In this example, the ID requester 104 is typically also embodied in the form of a user device such as a smart phone, and the communication set up in S301 may for instance be a telephone call, short message service (SMS), or an e-mail being sent. In the following, it is assumed that the individual 101 makes a telephone call to the ID requester 104 via the user device 102.

Should the ID requester 104 wish to identify the individual 101 calling, the ID requester 104 may e.g. be configured via an appropriate app for this specific purpose, where e.g. a certain key/button is pressed on the smart phone embodying the ID requester which has as an effect that the ID requester 104 contacts the secure server in S302. Any communication in the other direction, i.e. from the secure server 105 to the ID requester 104 may occur via secure push notifications, where security e.g. is provided by means of communicating over a secure channel.

Upon the ID requester 104 contacting the secure server 105 in S302, the IMSI of the user device 102 is included such that the secure server 105 can (a) verify that the IMSI has been enrolled (possibly along with the public key of the user device 102) in S303 and (b) subsequently contact the individual 101 via the user device 102. As previously mentioned, if a group enrolment is undertaken, each IMSI that was included with the group enrolment can be verified in S303.

Similarly to what has previously been described, the secure server 105 authenticates the user device 102 in step S304 by having the user device 102 prove knowledge of a challenge provided by the secure server 105.

Thus, assuming that the same process is used as that utilized during the authentication of Figure 3, the authentication of S304 is in an exemplifying embodiment performed by the secure server 105 providing a challenge to the user device 102 in step S304a. Thus, the secure server 105 generates a nonce and sends the nonce to the user device 102 in S304a. In this embodiment, the secure server 105 also includes the public key of the ID requester 104 in S304a. In order for the secure server 105 to authenticate the user device 102, the user device 102 signs the nonce in S304b with a user device private key and sends the signed nonce to the secure server 105 in S304c. In this embodiment, the user device 102 will also encrypt the signed authentication token (received from the secure server 105 in S106 during the enrolment process of Figure 2) with the public key of the ID requester 104 and send the signed authentication token - now also being encrypted - to the secure server 105 in S304c. Advantageously, due to this encryption using the public key of the ID requester 104, the signed authentication token will not become available to the secure server 105.

The secure server 105 verifies in S304d the signature having been provided to the nonce by utilizing the public key of the user device 102 stored by the secure server 105 in its enrolment database (the correct database entry being found using the IMSI) and ensures that the nonce received in S304c is the same as the nonce that was sent in S304a, wherein the user device 102 is successfully authenticated at the secure server 105.

As previously described, before the user device 102 signs the nonce, the individual 101 may optionally be requested to authenticate herself locally at the user device 102. The user device 102 may be provided with a fingerprint sensor, iris sensor, face sensor, etc., configured to extract biometric data of the individual 101, which extracted biometric data is compared to a biometric template securely stored at the user device 102, and if there is a match, the individual is authenticated at the user device 102, which proceeds with signing the nonce and sending the signed nonce to the secure server 105 in S304c.

After the secure server 105 has verified the signed nonce in S304d, the secure server 105 sends in S305 the signed authentication token (having been encrypted with the public key of the ID requester 104) to the ID requester 104 in S305, which thereafter is decrypted in S306 using the corresponding private key of the ID requester 104. The secure server 105 may further in the transmission of S305 include its public key (unless the ID requester 104 already has been provided with the public key as a result of forming part of a PKI including the secure server 105).

Finally in S307, as previously described with reference to step S202 of Figure 3, the ID requester 104 uses the public key of the secure server 105 to verify the signed authentication token that was received in encrypted form in S305 and decrypted in S306. Thus, this verification is successful if the public key utilized for the verification corresponds to the private key that was used by the secure server 105 upon initially signing the authentication token in S104 of Figure 2. Alternatively, a certificate utilized by the secured server 105 in S105 is verified in S307.

In an embodiment, if the phone number of the individual 101 was included as personal data in the trusted ID during enrolment, the verification step of S307 is strengthened in that the ID requester 104 thus can ensure that the phone number used when making the call in S301 corresponds to the phone call included in the trusted ID of the signed authentication token.

Further, traceability may be provided in that ID requester 104 can be configured to save the authentication token with a timestamp each time the authentication token is received, Moreover, the secure server 105 may be configured to register all enrolments, authentications and identifications being undertaken with associated timestamps. It may thus be verified at a later point at what time a specific action was taken.

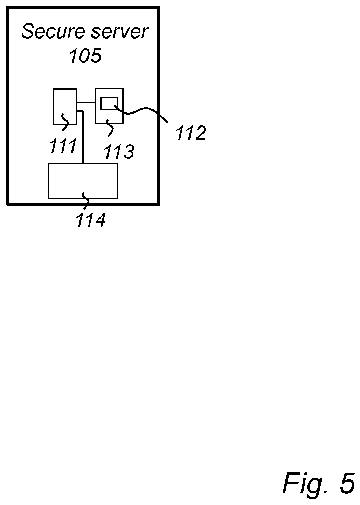

Figure 5 illustrates a secure server 105 according to an embodiment, where the steps of the method performed by the secure server 105 in practice are performed by a processing unit 111 embodied in the form of one or more microprocessors arranged to execute a computer program 112 downloaded to a storage medium 113 associated with the microprocessor, such as a Random Access Memory (RAM), a Flash memory or a hard disk drive. The processing unit 111 is arranged to cause the secure server 105 to carry out the method according to embodiments when the appropriate computer program 112 comprising computer-executable instructions is downloaded to the storage medium 113 and executed by the processing unit 111. The storage medium 113 may also be a computer program product comprising the computer program 112. Alternatively, the computer program 112 may be transferred to the storage medium 113 by means of a suitable computer program product, such as a Digital Versatile Disc (DVD) or a memory stick. As a further alternative, the computer program 112 may be downloaded to the storage medium 113 over a network. The processing unit 111 may alternatively be embodied in the form of a digital signal processor (DSP), an application specific integrated circuit (ASIC), a field-programmable gate array (FPGA), a complex programmable logic device (CPLD), etc. The secure server 105 further comprises a communication interface 114 (wired and/or wireless) over which the secure server 105 is configured to transmit and receive data.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method of enrolling an individual (101) at a secure server (105), comprising:
engaging (S101), via a user device (102), in an enrolment process with the individual (101);
registering (S102) the user device (102) by receiving a public key, the public key being created by the user device (102) along with a private key corresponding to the public key;
acquiring (S103) a trusted identifier of the individual (101);
associating (S104) the acquired trusted identifier of the individual (101) with at least one database index to create an authentication token, the database index being utilized for look-up at the secure server (105);
signing (S105) the authentication token; and
sending (S106) the signed authentication token to the user device (102), while deleting (S107) the acquired trusted identifier at the secure server (105).

2. The method of claim 1, wherein the trusted identifier comprises signed personal data of the individual (101) including at least one or more of name, address, personal identity number and social security number of the individual (101).

3. The method of any one of the preceding claims, wherein said at least one database index includes one or more of:
the public key of the user device (102), contact information of the individual (101) including at least one or more of a telephone number, IP address, e-mail address, International Mobile Subscriber Identity, IMSI, of the user device (102), and a created user identifier.

4. The method of claim 3, wherein a group enrolment is performed where a plurality of public keys are received (S102) that are created by the user device (102) along with private keys corresponding to the public keys.

5. The method of claim 4, wherein each public key being received (S102) is associated with at least one database index.

6. The method of any one of the preceding claims, wherein the public key of the user device (102) has been signed with an attestation key of a trusted provider.

7. The method of any one of the preceding claims, further comprising authenticating the user device (102) by:
sending (S102a) a nonce to the user device (102);
receiving (S102c) the nonce signed by the user device (102); and
verifying (S102d) the signed nonce using the public key of the user device (102).

8. The method of claim 7, further comprising:
requesting authentication of the individual (101) at the user device (102) upon sending (S102a) the nonce, wherein the nonce is signed at the user device (102) if there is a match when comparing (S102b) biometric data of the individual extracted locally at the user device (102) to a biometric template stored at the user device (102).

9. The method of any one of the preceding claims, further comprising:
receiving (S204), from a party (104) to which the individual (101) sends (S201) an authentication request, via the user device (102), a database index included in the signed authentication token sent with the authentication request, which signed authentication token is verified (S203) at said party (104);
verifying (S205) that the database index has been previously enrolled;
authenticating (S207) the user device (102) by providing the user device (102) with a challenge and having the user device (102) prove knowledge of the challenge; and
sending (S208) a confirmation to said party (104) that the authentication of the user device (102) is successful.

10. The method of claim 9, wherein the authenticating (S207) of the user device (102) comprises:
sending (S207a) a nonce to the user device (102);
receiving (S207c) the nonce signed by the user device (102); and
verifying (S207d) the signed nonce using the public key of the user device (102).

11. The method of claim 10, further comprising:
requesting authentication of the individual (101) at the user device (102) upon sending (S207a) the nonce, wherein the nonce is signed at the user device (102) if there is a match when comparing (S207b) biometric data of the individual (101) extracted locally at the user device (102) to a biometric template stored at the user device (102).

12. The method of any one of claims 1-8, further comprising:
receiving (S302), from a party (104) with which the individual (101) communicates (S301) via the user device (102), contact information of the individual (101) along with a public key of said party (104);
verifying (S303) that a public key of the user device (102) has been previously enrolled for the received contact information of the individual (101);
authenticating (S304) the user device (102) by providing the user device (102) with a challenge and having the user device (102) prove knowledge of the challenge, while providing the user device (102) with the public key of said party (104) and in response receiving the signed authentication token from the user device (102) encrypted with the public key of said party (104); and
sending (S305) the encrypted signed authentication token to said party (104), wherein said party (104) decrypts (S306) the encrypted signed authentication token using the corresponding private key and verifies (S307) the signed authentication token.

13. The method of claim 12, wherein the verification (S307) performed at said party (104) further comprises verifying that personal data included in the trusted identifier matches personal data provided by the individual (101) when communicating (S301) with said party (104).

14. The method of claims 12 or 13, wherein the authenticating (S304) of the user device (102) comprises:
sending (S304a) a nonce to the user device (102) along with the public key of said party (104);
receiving (S304c) the nonce signed by the user device (102) along with the encrypted signed authentication token; and
verifying (S304d) the signed nonce using the public key of the user device (102).

15. A secure server (105) configured to enrol an individual (101), the secure server (105) comprising a processing unit (111) and a memory (113), said memory containing instructions (112) executable by said processing unit (111), whereby the secure server (105) is operative to:
engaging (S101), via a user device (102), in an enrolment process with the individual (101);
registering (S102) the user device (102) by receiving a public key, the public key being created by the user device (102) along with a private key corresponding to the public key;
acquiring (S103) a trusted identifier of the individual (101);
associating (S104) the acquired trusted identifier of the individual (101) with at least one database index to create an authentication token, the database index being utilized for look-up at the secure server (105);
signing (S105) the authentication token; and
sending (S106) the signed authentication token to the user device (102), while deleting (S107) the acquired trusted identifier at the secure server (105).

## Patentansprüche

1. Verfahren zum Registrieren einer Person (101) auf einem sicheren Server (105), umfassend:
Beginnen (S101), über eine Benutzervorrichtung (102), eines Registrierungsprozesses mit der Person (101);
Registrieren (S102) der Benutzervorrichtung (102) durch Empfangen eines öffentlichen Schlüssels, wobei der öffentliche Schlüssel durch die Benutzervorrichtung (102) zusammen mit einem dem öffentlichen Schlüssel entsprechenden privaten Schlüssel erzeugt wird;
Erfassen (S103) einer vertrauenswürdigen Kennung der Person (101);
Verknüpfen (S104) der erfassten vertrauenswürdigen Kennung der Person (101) mit mindestens einem Datenbankindex, um ein Authentifizierungstoken zu erzeugen, wobei der Datenbankindex für das Nachschlagen auf dem sicheren Server (105) verwendet wird;
Signieren (S105) des Authentifizierungstokens; und
Senden (S106) des signierten Authentifizierungstokens an die Benutzervorrichtung (102), während die erfasste vertrauenswürdige Kennung auf dem sicheren Server (105) gelöscht wird (S107).

2. Verfahren nach Anspruch 1, wobei die vertrauenswürdige Kennung signierte personenbezogene Daten der Person (101) umfasst, einschließlich mindestens eines oder mehrerer von Name, Adresse, persönliche Identitätsnummer und Sozialversicherungsnummer der Person (101).

3. Verfahren nach einem der vorangehenden Ansprüche, wobei der mindestens eine Datenbankindex eines oder mehrere enthält von:
dem öffentlichen Schlüssel der Benutzervorrichtung (102), Kontaktinformationen der Person (101), einschließlich mindestens eines oder mehrerer von einer Telefonnummer, einer IP-Adresse, einer E-Mail-Adresse, einer Internationalen Mobilfunkteilnehmerkennung (IMSI) der Benutzervorrichtung (102), und einer erzeugten Benutzerkennung.

4. Verfahren nach Anspruch 3, wobei eine Gruppenregistrierung durchgeführt wird, bei der mehrere öffentliche Schlüssel empfangen werden (S102), die durch die Benutzervorrichtung (102) zusammen mit privaten Schlüsseln, die den öffentlichen Schlüsseln entsprechen, erzeugt wurden.

5. Verfahren nach Anspruch 4, wobei jeder öffentliche Schlüssel, der empfangen wird (S102), mit mindestens einem Datenbankindex verknüpft ist.

6. Verfahren nach einem der vorangehenden Ansprüche, wobei der öffentliche Schlüssel der Benutzervorrichtung (102) mit einem Attestierungsschlüssel eines vertrauenswürdigen Anbieters signiert wurde.

7. Verfahren nach einem der vorangehenden Ansprüche, des Weiteren umfassend das Authentifizieren der Benutzervorrichtung (102) durch:
Senden (S102a) einer Nonce an die Benutzervorrichtung (102);
Empfangen (S102c) der durch die Benutzervorrichtung (102) signierten Nonce; und
Verifizieren (S102d) der signierten Nonce unter Verwendung des öffentlichen Schlüssels der Benutzervorrichtung (102).

8. Verfahren nach Anspruch 7, des Weiteren umfassend:
Anfordern einer Authentifizierung der Person (101) in der Benutzervorrichtung (102) nach dem Senden (S102a) der Nonce, wobei die Nonce in der Benutzervorrichtung (102) signiert wird, falls das Vergleichen (S102b) von biometrischen Daten der Person, die lokal in der Benutzervorrichtung (102) extrahiert wurden, mit einer in der Benutzervorrichtung (102) gespeicherten biometrischen Vorlage eine Übereinstimmung ergibt.

9. Verfahren nach einem der vorangehenden Ansprüche, des Weiteren umfassend:
Empfangen (S204), von einer Partei (104), an die die Person (101) über die Benutzervorrichtung (102) eine Authentifizierungsanforderung sendet (S201), eines Datenbankindexes, der in dem mit der Authentifizierungsanforderung gesendeten signierten Authentifizierungstoken enthalten ist, wobei das signierte Authentifizierungstoken bei der genannten Partei (104) verifiziert wird (S203);
Verifizieren (S205), dass der Datenbankindex zuvor registriert wurde;
Authentifizieren (S207) der Benutzervorrichtung (102), indem an die Benutzervorrichtung (102) eine Anfrage übermittelt wird und die Benutzervorrichtung (102) die Kenntnis der Anfrage nachweisen muss; und
Senden (S208) einer Bestätigung an die Partei (104), dass die Authentifizierung der Benutzervorrichtung (102) erfolgreich war.

10. Verfahren nach Anspruch 9, wobei das Authentifizieren (S207) der Benutzervorrichtung (102) umfasst:
Senden (S207a) einer Nonce an die Benutzervorrichtung (102);
Empfangen (S207c) der durch die Benutzervorrichtung (102) signierten Nonce; und
Verifizieren (S207d) der signierten Nonce unter Verwendung des öffentlichen Schlüssels der Benutzervorrichtung (102).

11. Verfahren nach Anspruch 10, des Weiteren umfassend:
Anfordern einer Authentifizierung der Person (101) in der Benutzervorrichtung (102) nach dem Senden (S207a) der Nonce, wobei die Nonce in der Benutzervorrichtung (102) signiert wird, falls das Vergleichen (S207b) von biometrischen Daten der Person (101), die lokal in der Benutzervorrichtung (102) extrahiert wurden, mit einer in der Benutzervorrichtung (102) gespeicherten biometrischen Vorlage eine Übereinstimmung ergibt.

12. Verfahren nach einem der Ansprüche 1-8, des Weiteren umfassend:
Empfangen (S302), von einer Partei (104), mit der die Person (101) über die Benutzervorrichtung (102) kommuniziert (S301), von Kontaktinformationen der Person (101) zusammen mit einem öffentlichen Schlüssel der Partei (104);
Verifizieren (S303), dass bereits ein öffentlicher Schlüssel der Benutzervorrichtung (102) für die empfangenen Kontaktinformationen der Person (101) registriert wurde;
Authentifizieren (S304) der Benutzervorrichtung (102), indem an die Benutzervorrichtung (102) eine Anfrage übermittelt wird und die Benutzervorrichtung (102) die Kenntnis der Anfrage nachweisen muss, während an die Benutzervorrichtung (102) der öffentliche Schlüssel der Partei (104) übermittelt wird und in Reaktion darauf das mit dem öffentlichen Schlüssel der Partei (104) verschlüsselte signierte Authentifizierungstoken von der Benutzervorrichtung (102) empfangen wird; und
Senden (S305) des verschlüsselten signierten Authentifizierungstokens an die Partei (104), wobei die Partei (104) das verschlüsselte signierte Authentifizierungstoken unter Verwendung des entsprechenden privaten Schlüssels entschlüsselt (S306) und das signierte Authentifizierungstoken verifiziert (S307).

13. Verfahren nach Anspruch 12, wobei die bei der Partei (104) durchgeführte Verifizierung (S307) des Weiteren umfasst zu verifizieren, dass die in der vertrauenswürdigen Kennung enthaltenen personenbezogenen Daten mit personenbezogenen Daten übereinstimmen, die durch die Person (101) während des Kommunizierens (S301) mit der Partei (104) übermittelt wurden.

14. Verfahren nach Anspruch 12 oder 13, wobei das Authentifizieren (S304) der Benutzervorrichtung (102) umfasst:
Senden (S304a) einer Nonce an die Benutzervorrichtung (102) zusammen mit dem öffentlichen Schlüssel der Partei (104);
Empfangen (S304c) des durch die Benutzervorrichtung (102) signierten Nonce zusammen mit dem verschlüsselten signierten Authentifizierungstoken; und
Verifizieren (S304d) der signierten Nonce unter Verwendung des öffentlichen Schlüssels der Benutzervorrichtung (102).

15. Sicherer Server (105), der dazu eingerichtet ist, eine Person (101) zu registrieren, wobei der sichere Server (105) eine Verarbeitungseinheit (111) und einen Speicher (113) umfasst, wobei der Speicher Instruktionen (112) umfasst, die durch die Verarbeitungseinheit (111) ausführbar sind, wobei der sichere Server (105) ausgelegt ist zum:
Beginnen (S101), über eine Benutzervorrichtung (102), eines Registrierungsprozesses mit der Person (101);
Registrieren (S102) der Benutzervorrichtung (102) durch Empfangen eines öffentlichen Schlüssels, wobei der öffentliche Schlüssel durch die Benutzervorrichtung (102) zusammen mit einem dem öffentlichen Schlüssel entsprechenden privaten Schlüssel erzeugt wird;
Erfassen (S103) einer vertrauenswürdigen Kennung der Person (101);
Verknüpfen (S104) der erfassten vertrauenswürdigen Kennung der Person (101) mit mindestens einem Datenbankindex, um ein Authentifizierungstoken zu erzeugen, wobei der Datenbankindex für das Nachschlagen auf dem sicheren Server (105) verwendet wird;
Signieren (S105) des Authentifizierungstokens; und
Senden (S106) des signierten Authentifizierungstokens an die Benutzervorrichtung (102), während die erfasste vertrauenswürdige Kennung auf dem sicheren Server (105) gelöscht wird (S107).

## Revendications

1. Procédé d'inscription d'un individu (101) au niveau d'un serveur sécurisé (105), comprenant :
la participation (S101), via un dispositif utilisateur (102), à un processus d'inscription de l'individu (101) ;
l'enregistrement (S102) du dispositif utilisateur (102) par la réception d'une clé publique, la clé publique étant créée par le dispositif utilisateur (102) avec une clé privée correspondant à la clé publique ;
l'acquisition (S103) d'un identifiant de confiance de l'individu (101) ;
l'association (S104) de l'identifiant de confiance acquis de l'individu (101) à au moins un indice de base de données pour créer un jeton d'authentification, l'indice de base de données étant utilisé pour une consultation au niveau du serveur sécurisé (105) ;
la signature (S105) du jeton d'authentification ; et
l'envoi (S106) du jeton d'authentification signé au dispositif utilisateur (102), tout en supprimant (S107) l'identifiant de confiance acquis au niveau du serveur sécurisé (105).

2. Procédé selon la revendication 1, dans lequel l'identifiant de confiance comprend des données personnelles signées de l'individu (101) incluant au moins un ou plusieurs parmi un nom, une adresse, un numéro d'identité personnel et un numéro de sécurité sociale de l'individu (101).

3. Procédé selon l'une quelconque des revendications précédentes, dans lequel ledit au moins un indice de base de données inclut une ou plusieurs parmi :
la clé publique du dispositif utilisateur (102), des informations de contact de l'individu (101) incluant au moins un ou plusieurs parmi un numéro de téléphone, une adresse IP, une adresse e-mail, une identité internationale d'abonné mobile, IMSI, du dispositif utilisateur (102) et un identifiant utilisateur créé.

4. Procédé selon la revendication 3, dans lequel il est réalisé une inscription de groupe dans le cadre de laquelle il est reçu (S102) une pluralité de clés publiques qui sont créées par le dispositif utilisateur (102) avec des clés privées correspondant aux clés publiques.

5. Procédé selon la revendication 4, dans lequel chaque clé publique qui est reçue (S102) est associée à au moins un indice de base de données.

6. Procédé selon l'une quelconque des revendications précédentes, dans lequel la clé publique du dispositif utilisateur (102) a été signée avec une clé d'attestation d'un fournisseur de confiance.

7. Procédé selon l'une quelconque des revendications précédentes, comprenant en outre l'authentification du dispositif utilisateur (102) par :
l'envoi (S102a) d'un nonce au dispositif utilisateur (102) ;
la réception (S102c) du nonce signé par le dispositif utilisateur (102) ; et
la vérification (S102d) du nonce signé à l'aide de la clé publique du dispositif utilisateur (102).

8. Procédé selon la revendication 7, comprenant en outre :
la demande d'authentification de l'individu (101) au niveau du dispositif utilisateur (102) lors de l'envoi (S102a) du nonce, dans lequel le nonce est signé au niveau du dispositif utilisateur (102) en cas de correspondance lors de la comparaison (S102b) de données biométriques de l'individu extraites localement au niveau du dispositif utilisateur (102) à un modèle biométrique stocké au niveau du dispositif utilisateur (102).

9. Procédé selon l'une quelconque des revendications précédentes, comprenant en outre :
la réception (S204), depuis une partie (104) à laquelle l'individu (101) envoie (S201) une demande d'authentification, via le dispositif utilisateur (102), d'un indice de base de données inclus dans le jeton d'authentification signé envoyé avec la demande d'authentification, le jeton d'authentification signé étant vérifié (S203) au niveau de ladite partie (104) ;
la vérification (S205) que l'indice de base de données a été précédemment inscrit ;
l'authentification (S207) du dispositif utilisateur (102) en soumettant un défi au dispositif utilisateur (102) et en demandant au dispositif utilisateur (102) de prouver qu'il sait relever le défi ; et
l'envoi (S208) d'une confirmation à ladite partie (104) que l'authentification du dispositif utilisateur (102) est réussie.

10. Procédé selon la revendication 9, dans lequel authentification (S207) du dispositif utilisateur (102) comprend :
l'envoi (S207a) d'un nonce au dispositif utilisateur (102) ;
la réception (S207c) du nonce signé par le dispositif utilisateur (102) ; et
la vérification (S207d) du nonce signé à l'aide de la clé publique du dispositif utilisateur (102).

11. Procédé selon la revendication 10, comprenant en outre :
la demande d'authentification de l'individu (101) au niveau du dispositif utilisateur (102) lors de l'envoi (S207a) du nonce, dans lequel le nonce est signé au niveau du dispositif utilisateur (102) en cas de correspondance lors de la comparaison (S207b) de données biométriques de l'individu (101) extraites localement au niveau du dispositif utilisateur (102) à un modèle biométrique stocké au niveau du dispositif utilisateur (102).

12. Procédé selon l'une quelconque des indications 1 à 8, comprenant en outre :
la réception (S302), depuis une partie (104) avec laquelle l'individu (101) communique (S301) via le dispositif utilisateur (102), d'informations de contact de l'individu (101) avec une clé publique de ladite partie (104) ;
la vérification (S303) qu'une clé publique du dispositif utilisateur (102) a été précédemment inscrite pour les informations de contact reçues de l'individu (101) ;
l'authentification (S304) du dispositif utilisateur (102) en soumettant un défi au dispositif utilisateur (102) et en demandant au dispositif utilisateur (102) de prouver qu'il sait relever le défi, tout en fournissant la clé publique de ladite partie (104) au dispositif utilisateur (102) et, en réponse, en recevant, depuis le dispositif utilisateur (102), le jeton d'authentification signé chiffré avec la clé publique de ladite partie (104) ; et
l'envoi (S305) du jeton d'authentification signé chiffré à ladite partie (104), dans lequel ladite partie (104) déchiffre (S306) le jeton d'authentification signé chiffré à l'aide de la clé privée correspondante et vérifie (S307) le jeton d'authentification signé.

13. Procédé selon la revendication 12, dans lequel la vérification (S307) réalisée au niveau de ladite partie (104) comprend en outre la vérification que des données personnelles incluses dans l'identifiant de confiance correspondent à des données personnelles fournies par l'individu (101) lors de la communication (S301) avec ladite partie (104).

14. Procédé selon la revendication 12 ou 13, dans lequel l'authentification (S304) du dispositif utilisateur (102) comprend :
l'envoi (S304a) d'un nonce au dispositif utilisateur (102) avec la clé publique de ladite partie (104) ;
la réception (S304c) du nonce signé par le dispositif utilisateur (102) avec le jeton d'authentification signé chiffré ; et
la vérification (S304d) du nonce signé à l'aide de la clé publique du dispositif utilisateur (102).

15. Serveur sécurisé (105) configuré pour inscrire un individu (101), le serveur sécurisé (105) comprenant une unité de traitement (111) et une mémoire (113), ladite mémoire contenant des instructions (112) exécutables par ladite unité de traitement (111), selon lesquelles le serveur sécurisé (105) est fonctionnel pour :
participer (S101), via un dispositif utilisateur (102), à un processus d'inscription de l'individu (101) ;
enregistrer (S102) le dispositif utilisateur (102) par la réception d'une clé publique, la clé publique étant créée par le dispositif utilisateur (102) avec une clé privée correspondant à la clé publique ;
acquérir (S103) un identifiant de confiance de l'individu (101) ;
associer (S104) l'identifiant de confiance acquis de l'individu (101) à au moins un indice de base de données pour créer un jeton d'authentification, l'indice de base de données étant utilisé pour une consultation au niveau du serveur sécurisé (105) ;
signer (S105) le jeton d'authentification ; et
envoyer (S106) le jeton d'authentification signé au dispositif utilisateur (102), tout en supprimant (S107) l'identifiant de confiance acquis au niveau du serveur sécurisé (105).
